# EUROPEAN PATENT APPLICATION

(11) **EP 3 275 339 A1**
(43) Date of publication of application: **31.01.2018**
(21) Application number: 17382318.8
(22) Date of filing: 31.05.2017
(51) Int. Cl.: A47B 88/90, F16B 12/10

(54) **PIECE AND FRONTAL CLOSURE UNIT FOR THE ASSEMBLY OF DRAWERS**

(30) Priority: 26.07.2016 ES 201630962
(71) Applicant: Plastimodul, S.L., 03440 Ibi (ES)
(72) Inventor: SECO JAREÑO, Jose María, 03440 IBI (ES)
(74) Representative: González López-Menchero, Álvaro Luis

(57) **Abstract**

Frontal closure piece for the assembly of drawers which has a general "C" shape comprising an upper arm (8), a lower arm (9) and a rear joint section (10), both arms, the upper (8) and the lower (9), have a transversal "T"-shaped cross section and flexible tabs (11) protrude vertically from the upper arm (8), while the lower arm (9) has in its interior portion a castellated profile in which a series of indentations (12) and projections (13) alternate. In addition, the drawers on the lateral sides have a fixed piece which protrudes perpendicularly to the surface of the board and has a lower castellated profile resulting from a succession of projections and indentations. The unit is easy to assembly, safe and firmly secured.

## Description

### OBJECT OF THE INVENTION

The object of the present invention, as the title of the invention indicates, is a piece and the frontal closure unit for the assembly of drawers which uses said piece.

The invention is characterised by the special configuration and design both of the piece and the rest of the elements required for the assembly of the frontal portion in the assembly of a drawer, making it a unit that is easy to assemble, safe and firmly fastened.

The present invention is therefore falls within the field of drawers and in particular the assembly of the frontal closure of the same.

### BACKGROUND OF THE INVENTION

Numerous means are used in the state of the art for the assembly of drawers, particularly in the fixing assembly of the different parts such as the lateral sides with the front and bottom of the drawer.

These include dovetail assemblies, using tenons or by means of mortise-and-tenon.

All the known assembly means of perpendicular boards, particularly in the case of drawers require, prior machining of the boards and subsequently a rather complex assembly which depends greatly on the precision when carrying out the prior machining of the panels to be assembled.

Therefore, the object of the present invention is to develop a piece for the frontal closure of drawers which overcomes the outlined drawbacks of complexity and lack of precision, developing a piece and a unit like the one described below and whose essence is reflected in first claim.

### DESCRIPTION OF THE INVENTION

The object of the present invention is a piece and a frontal closure unit for the assembly of drawers.

The piece has a general "C" shape comprising an upper arm whose lower profile has tabs protruding vertically and which are deformable towards the interior space, while the lower arm has a castellated profile, also having a joining section of both arms.

The arms have a "T"-shaped transversal cross section such that they are used for the guidance and correct positioning in the lower space of the sides or laterals.

The sides or laterals also have means for retaining the frontal closure piece and which, in one possible embodiment, are projections in the form of open circumferences in which screws are threaded which press the exterior edge of the arms and prevent the removal of the frontal closure piece.

In addition, with the aim of fixing the frontal closure board of the drawers on the lateral sides, said frontal closure board has a fixed piece which protrudes perpendicular to the surface of the board and has a lower castellated profile resulting from a succession of projections and indentations arranged in a complementary manner to the castellated profile of the lower arm such that when the piece of the frontal board is introduced into the closure piece fixed on the sides, it is coupled in a complementary manner between projections and indentations and pushed to said position by means of flexible tabs when the indentations and projections are facing and complementary to each other.

Unless otherwise indicated, all the technical and scientific elements used in this specification have the meaning that is usually understood by a person skilled in the art to which this invention belongs. In the practice of the present invention, similar or equivalent methods and materials to those described in the specification can be used.

Throughout the description and claims, the word "comprise" and its variants are not intended to exclude other technical characteristics, additions, components or steps. For those skilled in the art, other objects, advantages and characteristics of the invention may be deduced from both the description and the practical use of the invention.

### DESCRIPTION OF THE FIGURES

In order to complement the description being given and with the aim of aiding a better understanding of the characteristics of the invention, in accordance with a preferred practical exemplary embodiment of the same, a set of drawings accompany the description as an integral part thereof in which the following is represented in an illustrative and non-limiting manner.
Fig. 1 shows representation of a drawer without the assembly of the frontal closure where the piece object of the invention.
Fig. 2 shows a detailed view of Figure 1 where the constructive details of the frontal closure piece of the drawers is seen.
Fig. 3 shows the frontal closure piece housed and fixed on a lateral side.
Fig. 4 shows the process of removing the removable piece.
Fig. 5 shows the interior face of the frontal closure of a drawer.
Fig. 6 shows a rear view of the process of fixing a drawer on the sides of the frontal closure.

### PREFERRED EMBODIMENT OF THE INVENTION

In view of the figures, a preferred embodiment of the proposed invention is described below.

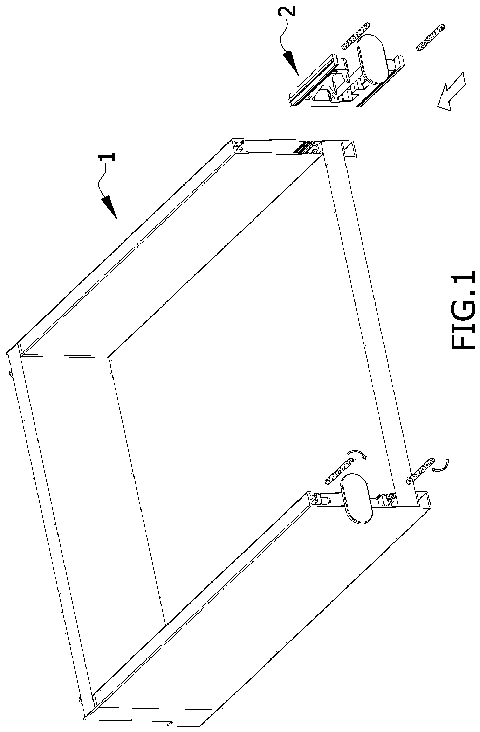

In Figure 1, we can observe a drawer without the fixing of the frontal closure, showing that the drawer has sides or laterals (1) on which the frontal closure piece (2) is housed and fixed.

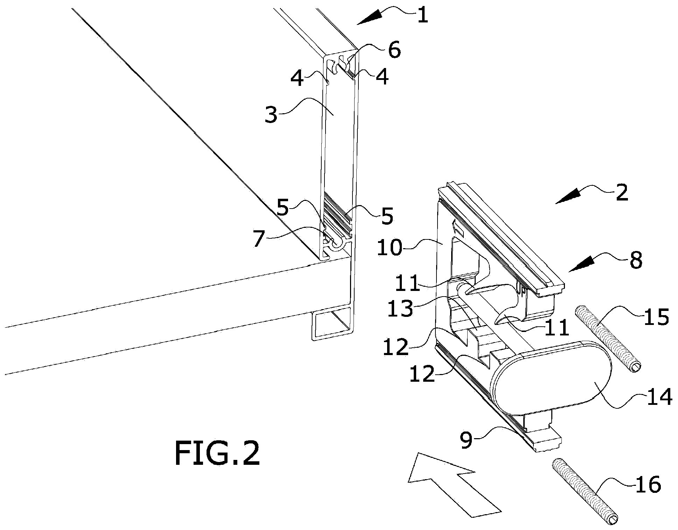

In Figure 2, it can be observed that the sides or laterals (1) of the drawer have a hollow interior (3), having in its interior upper rails (4) for the guidance of the piece (2), while in its lower portion it has lower guide rails (5), also for the frontal closure piece (2).

Said sides or laterals (1) also have in their interior, an upper projection (6) and another lower projection (7), both designed for the threading of screws (15) and (16) respectively.

The frontal closure piece (2) has a general "C" shape comprising an upper arm (8), a lower arm (9) and a rear joint section (10). Both arms, the upper (8) and the lower (9), have a transversal "T"-shaped cross section with wings which are supported on the upper (4) and lower (5) rails.

Flexible tabs (11) protrude through the lower portion of the upper arm (8) which enable the deformation thereof, while the lower arm (9) in its lower portion has a castellated profile in which a series of indentations (12) and projections (13) alternate.

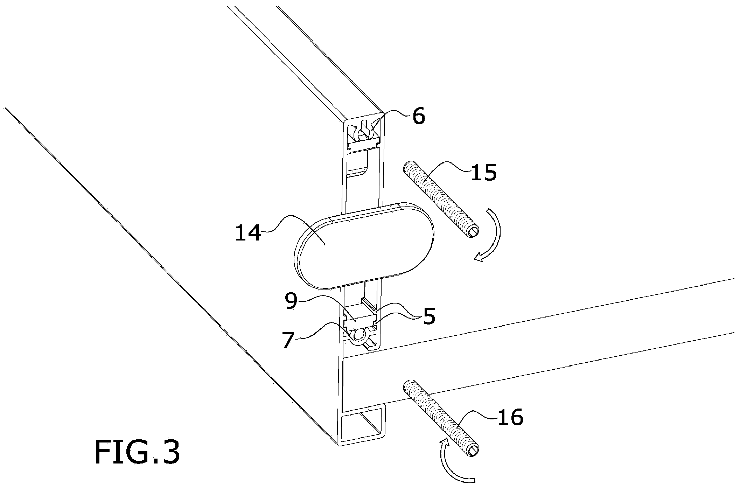

In Figure 3, it is observed how the frontal closure piece (2) is housed in the hollow interior (3) of the sides or laterals (1), being perfectly positioned owing to the upper (4) and lower (5) rails and retained by means of the screws (15) and (16) which, when threaded into the projections (6) and (7), press against the upper and lower edge of the upper (8) and lower (9) arm respectively.

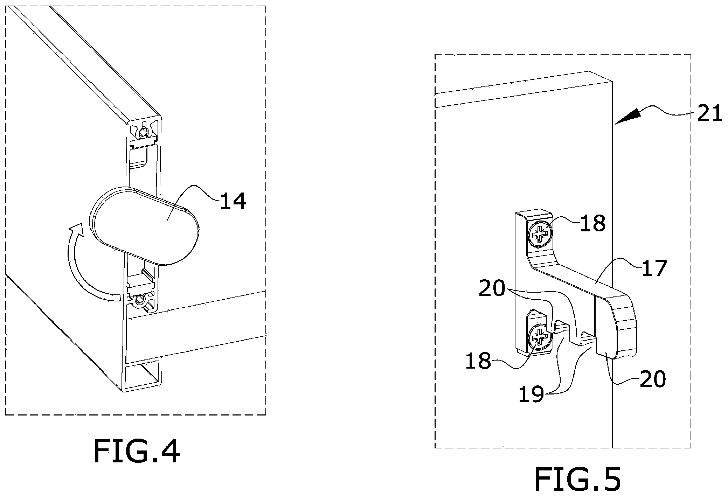

In Figure 4, it is observed that when the frontal closure piece (2) is fixed, the removal of the removable piece (14) is started.

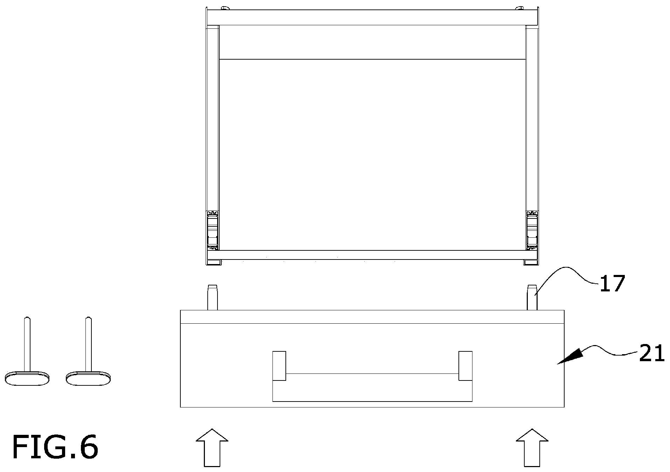

Lastly, in Figures 5 and 6, the frontal closure board (21) is observed which has a "T"-shaped horizontal piece where the upper arm is fixed on the board (21) by means of screws (18), while the arm, which is horizontal, has a lower castellated profile in which there is a series of projections (20) and indentations (19) in an alternating manner with a complementary arrangement of the indentations (12) and protrusions (13) of the castellated profile of the lower arm (9) of the frontal closure piece (2), such that it enables the entry of the "T"-shaped piece against the deformation of the flexible tabs (11) which cause the displacement of this piece until the indentations and projections of both pieces are coupled and prevent the removal of the frontal board (21).

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A frontal closure piece for the assembly of drawers **characterised in that** it has a general "C" shape comprising an upper arm (8), a lower arm (9) and a rear joint section (10), both arms, the upper (8) and the lower (9), have a transversal "T"-shaped cross section and flexible tabs (11) protrude vertically from the upper arm (8), while the lower arm (9) has in its interior portion a castellated profile in which a series of indentations (12) and projections (13) alternate.

2. The frontal closure piece for the assembly of drawers according to claim 1, **characterised in that** it has a removable piece (14) housed in the space comprised between the two arms and retained by the action of flexible tabs (11).

3. A frontal closure unit for the assembly of drawers using the piece according to claim 1 or 2, **characterised in that** the drawer has sides or laterals (1) which have a hollow interior (3), having in its interior upper rails (4) for guiding the piece (2), while in its lower portion it has lower guide rails (5), also for the frontal closure piece (2).

4. The frontal closure unit for the assembly of drawers **characterised in that** the sides or laterals (1) have in their interior, an upper projection (6) and another lower projection (7), both designed for the threading of screws (15) and (16) respectively.
